# EUROPEAN PATENT SPECIFICATION

(11) **EP 3 512 390 B1**
(45) Date of publication and mention of the grant of the patent: **18.11.2020**
(21) Application number: 17780023.2
(22) Date of filing: 15.09.2017
(51) Int. Cl.: A47J 37/06

(54) **AUTONOMOUS APPARATUS FOR COOKING FOOD, AND CORRESPONDING METHOD**
AUTONOME VORRICHTUNG ZUM KOCHEN VON LEBENSMITTELN UND ZUGEHÖRIGES VERFAHREN
APPAREIL AUTONOME DE CUISSON D'ALIMENTS ET PROCÉDÉ CORRESPONDANT

(30) Priority: 16.09.2016 IT 201600093505
(43) Date of publication of application: 24.07.2019
(73) Proprietor: De' Longhi Appliances S.r.l. Con Unico Socio, 31100 Treviso (IT)
(72) Inventor: DE' LONGHI, Giuseppe, 31100 Treviso (IT); MAZZON, Renzo, 31057 Silea (IT); TREVISAN, Gianpaolo, 37036 San Martino Buon Albergo (IT)
(74) Representative: Petraz, Gilberto Luigi
(86) International application number: PCT/EP2017/073307
(87) International publication number: WO 2018/050838

(56) References cited:
- WO-A1-2010/034374
- WO-A1-2014/174466
- WO-A1-2015/081549
- CN-A- 105 231 802
- CN-A- 105 615 686
- US-A- 5 590 583

## Description

### FIELD OF THE INVENTION

The present invention concerns an autonomous apparatus for cooking food and the corresponding cooking method.

The autonomous apparatus comprises a replaceable food container with which the cooking process is carried out by heating.

The autonomous apparatus according to the invention also provides a closing lid, with one or more heating devices and a heat transfer device also being present.

### BACKGROUND OF THE INVENTION

In the domestic environment, autonomous apparatuses for cooking food are known, comprising a support body and an internal container, selectively extractable and open at the top.

The support body is provided with a closing lid to create a cooking compartment inside it, with a controlled atmosphere suitable for the cooking to be carried out.

The controlled atmosphere is generated by heating devices, that is, heat energy producers, and by a heat transfer device to transfer heat energy into the container.

It is known that heating devices can be disposed at the bottom and/or top and/or at the sides of the inner container.

WO 2014/174466 and US 5.590.583 disclose examples of a cooking apparatus of the type that is discussed in the present description.

A recurring problem of a cooking apparatus of this type is that it generally does not allow to prepare differentiated recipes according to requirements, where, for example, a particular heating mode of the cooking chamber is required, that is, a particular distribution of the heat, or again, where the heated stream has to hit the food in a certain way.

For example, for roasting, browning, frying with little fat, or baking cakes, pizzas, vegetables or suchlike, cooking should normally be done by hitting the food with a stream of hot air in correspondence with the opening of the container.

In this case, it is necessary, or in any case advisable, to cook the food with a high heat delivery in the top part, as in an oven, and cook the food slowly inside.

However, in the case of cooking by devices generally referred to as "multi-cookers", which are able to steam, boil or stew, the food may have to be mixed continuously or intermittently by means of a rotating stirring device. In this case, it is necessary or advisable to have a higher heating power than the previous situation.

One purpose of the present invention is to perfect a method that allows to prepare a plurality of recipes using the same basic autonomous cooking apparatus.

Another purpose of the present invention is to obtain an autonomous apparatus for cooking food that is extremely versatile and allows to perform differentiated cooking according to needs.

Another purpose is to obtain a cooking apparatus in which different cooking modes can be carried out in an independent and mutually exclusive manner.

Another purpose of the present invention is to obtain an autonomous apparatus that is compact, easy-to-use and economical, allowing to integrate in a single apparatus functions and procedures that are normally performed by separate cooking apparatuses.

Another purpose of the present invention is to obtain an autonomous apparatus for cooking food that allows to save energy.

The Applicant has devised, tested and embodied the present invention to overcome the shortcomings of the state of the art and to obtain these and other purposes and advantages.

### SUMMARY OF THE INVENTION

The present invention is set forth and characterized in the independent claims, while the dependent claims describe other characteristics of the invention or variants to the main inventive idea.

In accordance with the above purposes, the present invention concerns an autonomous apparatus for cooking food comprising a support body, a lid of the openable type, at least one specific replaceable container, a first heating device associated with a heat transfer device, a second heating device, a drive member connected to a mixing device and a control and command unit.

According to one aspect of the present invention, the autonomous apparatus comprises a recognition device configured to univocally recognize a specific container from between at least a first container of a first type and a second container of a second type, both interchangeable, the control and command unit being configured to selectively activate in a mutually exclusive manner in relation to the specific container recognized, respectively:
- the first heating device and the heat transfer device and a drive member on recognizing a first container of the first type;
- the second heating device at a second level of power and the drive member on recognizing a second container of the second type.

Advantageously, in this way, a user can use the same cooking apparatus to prepare recipes differentiated according to the type of food.

The control and command unit allows to determine a compartmented functioning in terms of devices driven and functions performed, according to cooking needs and to the information transmitted by the recognition device of the type of container used.

According to one embodiment, the first container has a continuous base wall.

According to another embodiment, the second container has a base wall with a through hole for the selective insertion of the mixing device and for the coupling of the second container to the drive member.

The present invention also concerns a cooking method that uses the autonomous apparatus.

### BRIEF DESCRIPTION OF THE DRAWINGS

These and other characteristics of the present invention will become apparent from the following description of some embodiments, given as a non-restrictive example with reference to the attached drawings wherein:
- fig. 1 is a cross section of a cooking apparatus in a first operating condition;
- fig. 2 is a cross section of a cooking apparatus in another operating condition.

To facilitate comprehension, the same reference numbers have been used, where possible, to identify identical common elements in the drawings. It is understood that elements and characteristics of one embodiment can conveniently be incorporated into other embodiments without further clarifications.

### DETAILED DESCRIPTION OF SOME EMBODIMENTS

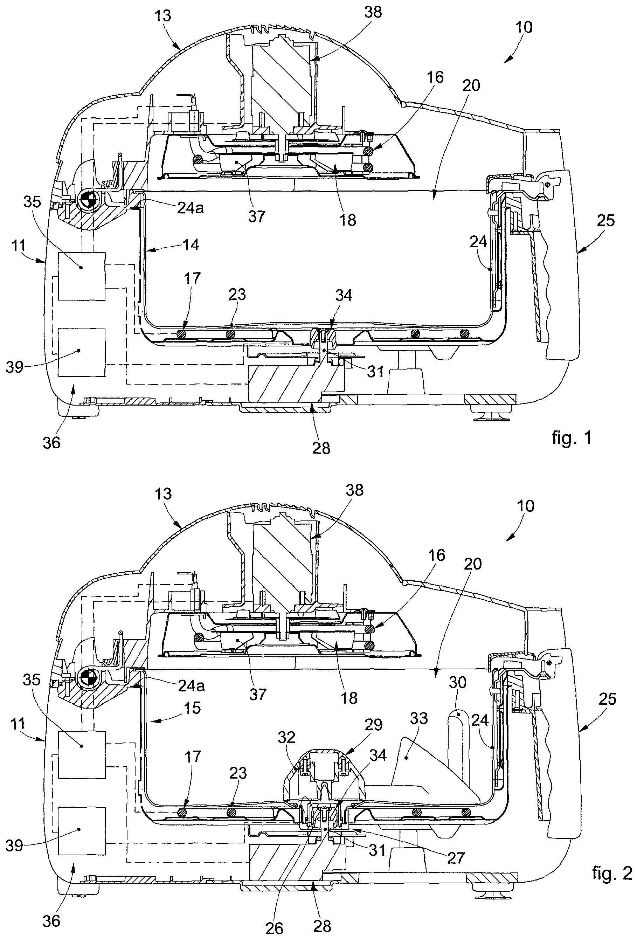

With reference to figs. 1 and 2, we will now describe possible embodiments of the present invention of an autonomous cooking apparatus 10 usable for cooking food with two types of different operating conditions, compartmented between them.

A first operating condition allows to fry, roast, simmer, brown or cook the food au gratin, or other.

Another second operating condition allows to make stews, to simply heat the food, to make risottos, steam cooking, braising, boiling, or suchlike.

The autonomous apparatus 10 comprises a support body 11, an openable lid 13, and at least one specific container 14, 15 for food, open at the top.

The containers 14 and 15 are interchangeable and replaceable, and are respectively of a first and a second type, as explained in more detail hereafter.

The lid 13, in a closed position and abutting against the edge of the support body 11, defines, together with the container 14, 15, a cooking compartment 20.

The presence of the lid 13 is functional in creating a controlled environment inside the cooking compartment 20 and with the conditions necessary for cooking the food.

The lid 13 can be made of the same material as the support body 11 or of a different material.

Advantageously, at least the lid 13 can be made of at least partly transparent material, to allow the user to view and hence to control the cooking.

The container 14, 15 is defined by a base wall 23, which in this non-restrictive case, is substantially circular, and by a lateral wall 24 connected to the base wall 23 and with a peripheral edge 24a.

The container 14, 15 is configured to allow the association of one or more interchangeable handles 25 to allow to handle the container 14, 15 itself.

For example, each handle 25 can cooperate with the peripheral edge 24a of the container 14, 15 and be mobile to selectively assume at least two stable positions.

Moreover, the handle 25 can be configured to cooperate with the lid 13 when it is in the closed position, obtaining a same-shape coupling with the latter.

The base wall 23 can have a surface made with a plurality of configurations, for example conical, or with a more or less accentuated humped shape.

In a preferred embodiment, to which reference will be made hereafter, the base wall 23 has a substantially flat configuration.

According to another embodiment, the container 14, 15 can have a plurality of through holes made on at least one portion of the lateral wall 24.

According to one aspect of the present invention, the specific container is selected from a group comprising at least one first container 14 of a first type and a second container 15 of a second type, interchangeable with each other.

According to one formulation of the present invention and shown by way of example in fig. 1, the first container 14 has the base wall 23 continuous.

According to another formulation of the present invention and shown by way of example in fig. 2, in correspondence with the base wall 23, the second container 15 has a through hole 26.

The through hole 26 is preferably disposed coaxial with respect to a median axis X of the base wall 23.

The second container 15 comprises sealing means 27 associated with the through hole 26 and configured to prevent the food contained in the second container 15 from passing through the through hole 26.

Moreover, the sealing means 27 have portions protruding with respect to the base wall 23 and in correspondence with the surface facing toward the outside and toward the inside of the container 14 respectively.

The protruding portion facing toward the inside of the second container 15 is configured to obtain a same-shape coupling with a mixing device 29.

The protruding portion facing toward the outside of the second container 15 is configured to obtain a same-shape coupling with a seating 34 of a drive member 28.

According to one embodiment, the second container 15 can have a stirring element 30 facing toward the inside of the container 15 and located in correspondence with the lateral wall 24.

Based on the above description, it is therefore clear that the first container 14 of the first type is used when the cooking modes and the corresponding recipes do not entail the need to mix the food during cooking, while the second container 15 of the second type instead provides a continuous, intermittent mixing of the food.

The autonomous apparatus 10 also comprises a first heating device 16 associated with a heat transfer device 18 and a second heating device 17.

The first heating device 16 and the second heating device 17 can be tubular electric resistances or resistive bands or resistive wires, of the induction type, able to generate heat and to convey it by induction and/or irradiation.

The first heating device 16 can advantageously be installed above the container 14, 15.

The heat transfer device 18 comprises an impeller 37 to generate a stream of air heated by the first heating device 16 directed toward the base wall 23 and the lateral wall 24 of the container 14, 15.

The heat transfer device 18 also comprises a drive member 38 to determine the rotation of the impeller 37.

At least one of either the first heating device 16 or the heat transfer device 18 can be installed in correspondence with the lid 13.

In a variant embodiment shown by way of example in figs. 1 and 2, the first heating device 16 and the heat transfer device 18 can be located in correspondence with the internal side of the lid 13 and advantageously facing toward the food contained inside the container 14, 15.

In another variant embodiment, the first heating device 16 and the heat transfer device 18 can be installed in correspondence with the lateral wall 24 of the container 14, 15.

The second heating device 17 can be disposed below the container 14, 15.

Furthermore, the second heating device 17 can be disposed next to the base wall 23, that is, immediately below the container 14, 15. In this way, the food is also cooked in the underlying part of the container 14, 15.

The second heating device 17 is configured to have at least one first level of power and a second level of power.

According to one embodiment, the second level of power is higher than the first level of power.

The autonomous apparatus 10 comprises the drive member 28 connected to the selectively removable mixing device 29.

The mixing device 29 can have a hub 32 connected to at least one blade 33.

The blade 33 is configured to determine the movement and mixing of the food during the rotation of the mixing device 29.

According to one form of embodiment, the blade 33 is configured to cooperate, during use, with the stirring element 30, and to determine the detachment of the food from the lateral wall 24.

The drive member 28 has a transmission shaft 31 to transmit the rotation to the mixing device 29 located coaxial with the median axis X.

Moreover, in correspondence with its end, the drive shaft 31 has a seating 34 configured to determine the same-shape coupling with the portion protruding toward the outside of the second container 15.

According to one embodiment, the drive member 28 can also be configured to cooperate with the first container 14 and cause it to rotate around the median axis X.

In this specific embodiment, the first container 14 can also have a protruding portion with respect to the base wall 23 facing toward the outside of the first container 14 to determine the same shape coupling with the seating 34.

The autonomous apparatus 10 comprises a control and command unit 35 associated with a recognition device 36 to recognize the containers 14, 15.

The recognition device 36 is configured to univocally recognize a specific container between at least the first container 14 and the second container 15, when the latter is in use inside the support body 11.

According to one embodiment, the recognition device 36 can comprise a sensor element 39 configured to selectively detect the presence of the first container 14 or the second container 15 and/or the mixing device 29.

According to a variant embodiment, the sensor element 39 can be an electromechanical sensor, a weight sensor, a magnetic sensor and/or a sensor for reading a univocal magnetic band code, or a radio frequency sensor for reading an RFID (Radio Frequency Identification) code.

Furthermore, the recognition device 36 is configured to transmit to the control and command unit 35 information relating to the specific container 14, 15 present in the autonomous apparatus 10.

The control and command unit 35 is connected to at least the first heating device 16, the second heating device 17, the heat transfer device 18 and the drive member 28.

The control and command unit 35 is configured to activate selectively and exclusively in relation to the specific container 14, 15 respectively:
- the first heating device 16, the heat transfer device 18 and the drive member 38 when the first container 14 is recognized;
- the second heating device 17 at the second level of power and the drive member 28 when the second container 15 is recognized.

According to one embodiment, the control and command unit 35 is configured to selectively and exclusively activate the second heating device 17 at the first level of power with the first container 14 installed.

According to another embodiment, the control and command unit 35 is configured to selectively and exclusively activate said second heating device 17 at the second level of power with the first container 14 installed.

According to another embodiment, the control and command unit 35 can also be configured to actuate the drive member 28 in association with the first container 14 to determine its rotation around the median axis X.

The present invention also concerns a method for cooking food that provides to use the same autonomous apparatus 10 to determine two different operating conditions compartmented according to the presence of the specific container 14, 15 inside the support body 11.

Therefore, according to his/her requirements, a user inserts a container, selected at least from the first container 14 and the second container 15, and the recognition device 36 detects, for example by means of the sensor element 39, the specific container 14, 15 being used.

The information detected by the sensor element 39 is transmitted to the control and command unit 35.

The control and command unit 35 processes the information received and transmits instructions correlated to the instructions to perform a selective and exclusive activation of the devices of the autonomous cooking apparatus 10.

It is clear that modifications and/or additions of parts can be made to the autonomous apparatus 10 and method for cooling food as described heretofore, without departing from the field and scope of the present invention.

It is also clear that, although the present invention has been described with reference to some specific examples, a person of skill in the art shall certainly be able to achieve many other equivalent forms of autonomous apparatus 10 and corresponding method for cooling food, having the characteristics as set forth in the claims and hence all coming within the field of protection defined thereby.

## Claims

1. Autonomous apparatus for cooking food comprising a support body (11), a lid (13) of the openable type, at least one specific replaceable container (14, 15), a first heating device (16) associated with a heat transfer device (18), a second heating device (17), a drive member (28) connected to a mixing device (29) and a control and command unit (35), **characterized in that** it comprises a recognition device (36) configured to univocally recognize a specific container from between at least a first container (14) of a first type and a second container (15) of a second type, both interchangeable, said control and command unit (35) being configured to selectively activate in a mutually exclusive manner in relation to the specific container (14, 15) recognized, respectively:
- said first heating device (16) and said heat transfer device (18) and a drive member (38) on recognizing the first container (14) of the first type;
- said second heating device (17) at a second level of power and said drive member (28) on recognizing the second container (15) of the second type.

2. Autonomous apparatus as in claim 1, **characterized in that** said control and command unit (35) is configured to activate said second heating device (17) at a first level of power less than said second level of power on recognizing said first container (14).

3. Autonomous apparatus as in claim 1 or 2, **characterized in that** said first container (14) is provided with a continuous base wall (23).

4. Autonomous apparatus as in claim 1 or 2, **characterized in that** said second container (15) is provided with a base wall (23) that has a through hole (26) disposed coaxial with respect to a median axis (X) of said base wall (23).

5. Apparatus as in any claim hereinbefore, **characterized in that** said recognition device (36) comprises a sensor element (39) configured to selectively detect the presence of said first container (14), or said second container (15) and/or said mixing device (29), said recognition device (36) being configured to transmit information concerning the specific container (14, 15) present to said control and command unit (35).

6. Method for cooking food using an autonomous cooking apparatus comprising a support body (11), a lid (13) of the openable type, at least one specific replaceable container (14, 15), a first heating device (16) associated with a heat transfer device (18), a second heating device (17), a drive member (28) connected to a mixing device (29) and a control and command unit (35), **characterized in that** it provides to univocally recognize a specific container from between at least a first container (14) of a first type and a second container (15) of a second type, both recognizable in themselves and interchangeable, by means of a recognition device (36), said recognition device (36) serves said control and command unit (35) to selectively activate in a mutually exclusive manner and on each occasion:
- said first heating device (16) and possibly also said heat transfer device (18) on recognizing the first container (14) of the first type;
- said second heating device (17) and said drive member (28) on recognizing the second container (15) of the second type.

7. Method as in claim 6, **characterized in that,** in the presence of the specific container (14) provided with a continuous base wall (23), said control and command unit (35) selectively activates in an exclusive manner said second heating device (17) at a first level of power.

8. Method as in claim 7, **characterized in that,** in the presence of the specific second container (15) which has a through hole (26) in correspondence with a base wall (23), the hole (26) being disposed coaxial with respect to a median axis (X) of the base wall (23), said control and command unit (35) selectively activates in an exclusive manner said second heating device (17) at a second level of power higher than said first level of power.

9. Method as in claim from 6 to 8, **characterized in that** said recognition device (36) detects by means of a sensor element (39) the presence of the container (14, 15), and/or said mixing device (29), and said recognition device (36) transmits information concerning the specific container (14, 15) present to said control and command unit (35).

## Patentansprüche

1. Autonome Vorrichtung zum Kochen von Nahrungsmitteln, umfassend einen Trägerkörper (11), einen Deckel (13) des aufmachbaren Typs, mindestens einen spezifischen austauschbaren Behälter (14, 15), eine erste Heizeinrichtung (16), die mit einer Wärmeübertragungseinrichtung (18) verbunden ist, eine zweite Heizeinrichtung (17), ein Antriebsglied (28), das mit einer Mischeinrichtung (29) verbunden ist, und eine Steuer- und Befehlseinheit (35), **dadurch gekennzeichnet, dass** diese eine Erkennungseinrichtung (36) aufweist, die dazu konfiguriert ist, einen spezifischen Behälter zwischen mindestens einem ersten Behälter (14) eines ersten Typs und einem zweiten Behälter (15) eines zweiten Typs, die beide austauschbar sind, eindeutig zu erkennen, wobei die Steuer- und Befehlseinheit (35) dazu konfiguriert ist, in einer sich gegenseitig ausschließenden Weise in Bezug auf den jeweils erkannten spezifischen Behälter (14, 15) Folgendes selektiv zu aktivieren:
- die erste Heizeinrichtung (16) und die Wärmeübertragungseinrichtung (18) und ein Antriebsglied (38) bei dem Erkennen des ersten Behälters (14) des ersten Typs;
- die zweite Heizeinrichtung (17) auf einem zweiten Energielevel und das Antriebsglied (28) bei dem Erkennen des zweiten Behälters (15) des zweiten Typs.

2. Autonome Vorrichtung nach Anspruch 1, **dadurch gekennzeichnet, dass** die Steuer- und Befehlseinheit (35) dazu konfiguriert ist, bei dem Erkennen des ersten Behälters (14) die zweite Heizeinrichtung (17) auf einen ersten Energielevel zu aktivieren, der kleiner als der zweite Energielevel ist.

3. Autonome Vorrichtung nach Anspruch 1 oder 2, **dadurch gekennzeichnet, dass** der erste Behälter (14) mit einer durchgehenden Bodenwand (23) versehen ist.

4. Autonome Vorrichtung nach Anspruch 1 oder 2, **dadurch gekennzeichnet, dass** der zweite Behälter (15) mit einer Bodenwand (23) versehen ist, die ein Durchgangsloch (26) aufweist, das koaxial in Bezug auf eine Mittelachse (X) der Bodenwand (23) angeordnet ist.

5. Vorrichtung nach einem der vorhergehenden Ansprüche, **dadurch gekennzeichnet, dass** die Erkennungsvorrichtung (36) ein Sensorelement (39) umfasst, das dazu konfiguriert ist, die Anwesenheit des ersten Behälters (14) oder des zweiten Behälters (15) und/oder der Mischeinrichtung (29) selektiv zu erfassen, wobei die Erkennungsvorrichtung (36) dazu konfiguriert ist, Informationen bezüglich des spezifischen anwesenden Behälters (14, 15) an die Steuer- und Befehlseinheit (35) zu übertragen.

6. Verfahren zum Kochen von Nahrungsmitteln unter Verwendung einer autonomen Vorrichtung zum Kochen, umfassend einen Trägerkörper (11), einen Deckel (13) des aufmachbaren Typs, mindestens einen spezifischen austauschbaren Behälter (14, 15), eine erste Heizeinrichtung (16), die mit einer Wärmeübertragungseinrichtung (18) verbunden ist, eine zweite Heizeinrichtung (17), ein Antriebsglied (28), das mit einer Mischeinrichtung (29) verbunden ist, und eine Steuer- und Befehlseinheit (35), **dadurch gekennzeichnet, dass** es die eindeutige Erkennung eines spezifischen Behälters zwischen mindestens einem ersten Behälter (14) eines ersten Typs und einem zweiten Behälter (15) eines zweiten Typs, die beide einzeln erkennbar und austauschbar sind, durch Mittel einer Erkennungseinrichtung (36) vorsieht, wobei die Erkennungseinrichtung (36) der Steuer- und Befehlseinheit (35) dazu dient, in sich gegenseitig ausschließender Weise und bei jeder Gelegenheit Folgendes zu aktivieren:
- die erste Heizeinrichtung (16) und möglicherweise auch die Wärmeübertragungseinrichtung (18) bei dem Erkennen des ersten Behälters (14) des ersten Typs;
- die zweite Heizeinrichtung (17) und das Antriebsglied (28) bei dem Erkennen des zweiten Behälters (15) des zweiten Typs.

7. Verfahren nach Anspruch 6, **dadurch gekennzeichnet, dass** bei Anwesenheit des spezifischen Behälters (14), der mit einer durchgehenden Bodenwand (23) versehen ist, die Steuer- und Befehlseinheit (35) die zweite Heizeinrichtung (17) selektiv auf einen ersten Energielevel in exklusiver Weise aktiviert.

8. Verfahren nach Anspruch 7, **dadurch gekennzeichnet, dass** bei Anwesenheit des spezifischen zweiten Behälters (15), der ein Durchgangsloch (26) in Verbindung mit einer Bodenwand (23) aufweist, wobei das Loch (26) koaxial in Bezug auf eine Mittelachse (X) der Bodenwand (23) angeordnet ist, die Steuer- und Befehlseinheit (35) die zweite Heizeinrichtung (17) selektiv auf einen zweiten Energielevel in exklusiver Weise aktiviert, der höher als der erste Energielevel ist.

9. Verfahren nach den Ansprüchen 6 bis 8, **dadurch gekennzeichnet, dass** die Erkennungsvorrichtung (36) durch Mittel eines Sensorelements (39) die Anwesenheit des Behälters (14, 15) und/oder der Mischvorrichtung (29) erfasst und die Erkennungsvorrichtung (36) Informationen bezüglich des spezifischen anwesenden Behälters (14, 15) an die Steuer- und Befehlseinheit (35) überträgt.

## Revendications

1. Appareil autonome de cuisson d'aliments comprenant un corps de support (11), un couvercle (13) du type pouvant être ouvert, au moins un récipient remplaçable spécifique (14, 15), un premier dispositif de chauffage (16) associé à un dispositif de transfert de chaleur (18), un second dispositif de chauffage (17), un élément d'entraînement (28) connecté à un dispositif de mélange (29) et une unité de contrôle et de commande (35), **caractérisé en ce qu'**il comprend un dispositif de reconnaissance (36) configuré pour reconnaître de manière univoque un récipient spécifique entre au moins un premier récipient (14) d'un premier type et un deuxième récipient (15) d'un deuxième type, tous deux interchangeables, ladite unité de contrôle et de commande (35) étant configurée pour s'activer sélectivement de manière mutuellement exclusive par rapport au récipient spécifique (14, 15) reconnu, respectivement :
- ledit premier dispositif de chauffage (16) et ledit dispositif de transfert de chaleur (18) et un élément d'entraînement (38) lors de la reconnaissance du premier récipient (14) de premier type ;
- ledit deuxième dispositif de chauffage (17) à un deuxième niveau de puissance et ledit élément d'entraînement (28) lors de la reconnaissance du deuxième récipient (15) de deuxième type.

2. Appareil autonome selon la revendication 1, **caractérisé en ce que** ladite unité de contrôle et de commande (35) est configurée pour activer ledit deuxième dispositif de chauffage (17) à un premier niveau de puissance inférieur audit deuxième niveau de puissance lors de la reconnaissance dudit premier récipient (14).

3. Appareil autonome selon la revendication 1 ou 2, **caractérisé en ce que** ledit premier récipient (14) est muni d'une paroi de base continue (23).

4. Appareil autonome selon la revendication 1 ou 2, **caractérisé en ce que** ledit second récipient (15) est fourni avec une paroi de base (23) qui a un trou traversant (26) disposé coaxialement par rapport à un axe médian (X) de ladite paroi de base (23).

5. Appareil selon l'une quelconque des revendications ci-dessus, **caractérisé en ce que** ledit dispositif de reconnaissance (36) comprend un élément capteur (39) configuré pour détecter sélectivement la présence dudit premier récipient (14), ou dudit second récipient (15) et/ou dudit dispositif de mélange (29), ledit dispositif de reconnaissance (36) étant configuré pour transmettre des informations concernant le récipient spécifique (14, 15) présent à ladite unité de contrôle et de commande (35).

6. Procédé de cuisson d'aliments utilisant un appareil de cuisson autonome comprenant un corps de support (11), un couvercle (13) du type pouvant être ouvert, au moins un récipient remplaçable spécifique (14, 15), un premier dispositif de chauffage (16) associé à un dispositif de transfert de chaleur (18), un second dispositif de chauffage (17), un élément d'entraînement (28) connecté à un dispositif de mélange (29) et une unité de contrôle et de commande (35), **caractérisé en ce qu'**il permet de reconnaître de manière univoque un récipient spécifique entre au moins un premier récipient (14) d'un premier type et un second récipient (15) d'un second type, tous deux reconnaissables en eux-mêmes et interchangeables, au moyen d'un dispositif de reconnaissance (36), ledit dispositif de reconnaissance (36) dessert ladite unité de contrôle et de commande (35) pour activer de manière sélective, de manière mutuellement exclusive et à chaque fois :
- ledit premier dispositif de chauffage (16) et éventuellement aussi ledit dispositif de transfert de chaleur (18) lors de la reconnaissance du premier récipient (14) de premier type ;
- ledit deuxième dispositif de chauffage (17) et ledit élément d'entraînement (28) lors de la reconnaissance du deuxième conteneur (15) de deuxième type.

7. Procédé selon la revendication 6, **caractérisé en ce que**, en présence du récipient spécifique (14) muni d'une paroi de base continue (23), ladite unité de contrôle et de commande (35) active sélectivement et de manière exclusive ledit deuxième dispositif de chauffage (17) à un premier niveau de puissance.

8. Procédé selon la revendication 7, **caractérisé en ce que**, en présence du second récipient spécifique (15) comprenant un trou traversant (26) en correspondance avec ladite paroi de base (23), le trou (26) étant disposé coaxialement par rapport à un axe médian (X) de la paroi de base (23), ladite unité de contrôle et de commande (35) active sélectivement de manière exclusive ledit second dispositif de chauffage (17) à un second niveau de puissance supérieur audit premier niveau de puissance.

9. Procédé selon la revendication 6 à 8, **caractérisé en ce que** ledit dispositif de reconnaissance (36) détecte au moyen d'un élément capteur (39) la présence du récipient (14, 15), et/ou dudit dispositif de mélange (29), et ledit dispositif de reconnaissance (36) transmet des informations concernant le récipient spécifique (14, 15) présent à ladite unité de contrôle et de commande (35).
